# EUROPEAN PATENT APPLICATION

(11) **EP 4 358 647 A1**
(43) Date of publication of application: **24.04.2024**
(21) Application number: 22202363.2
(22) Date of filing: 19.10.2022
(51) Int. Cl.: H05B 45/32, H05B 45/335, H02M 3/335

(54) **SYNCHRONOUS FLYBACK CONVERTER WITH FEEDBACK-CONTROLLED SECONDARY SIDE SWITCH**

(71) Applicant: Tridonic GmbH & Co KG, 6850 Dornbirn (AT)
(72) Inventor: Schertler, Markus, 6850 Dornbirn (AT); Stark, Stefan, 6850 Dornbirn (AT); Nachbaur, Stefan, 6850 Dornbirn (AT); Walch, Patrick, 6850 Dornbirn (AT)
(74) Representative: Rupp, Christian

(57) **Abstract**

A method is proposed for operating a synchronous flyback converter arranged to supply lighting means at its output terminals, the flyback converter having a transformer galvanically separating a primary side and secondary side of the converter. The power transmitted by the converter is feedback-controlled by actively adjusting the conducting time period of secondary side switch, thus adjusting the amount of a negative current flowing through said switch. In case of a change of a nominal value signal commanding the power to be transmitted by the flyback converter, a switching operation parameter of a primary side switch of the converter is adjusted by a feed forward manner. In case of such change of nominal value a feed forward disturbance signal is applied to the conducting time period of secondary side switch.

## Description

The invention is generally in the area of synchronous ("synch") flyback converters. It is known to use such synchronous flyback converters for supplying LED based lighting means with electrical power. Such synchronous flyback converters are a combination of a flyback converter together with an active switch on the secondary side, which replaces diodes of a traditional flyback converter.

The provision of the switch on the secondary side allows, during the conductive period of the switch, for a negative current flow. It is known that the amount of current flow can be used as a feedback control parameter, i.e. for setting the overall power transmitted by the synchronous flyback to the output terminals and thus, to the supplied lighting means.

While the control of the switching-on time period of the secondary side switch is thus closed-loop control (feedback control), it is known that the switching operation of the primary side switch of the flyback (connected in series to the primary winding of a transformer of the flyback converter) is done in open loop. Especially, it is known that a switching off current threshold for the primary side switch is set (feed-forward control) e.g. depending on the total amount of electrical power to be transmitted.

Now, the inventors have determined the problem that in case a varying nominal signal is applied, such as for example a dimming ramp, and the switching operation of the primary side switch of the flyback is correspondingly set to a new operation point (typically determined by a new switching off current threshold), the feedback control of the secondary side may lead to a ringing behavior and thus, to an oscillating power transmitted to the associated lighting means. This may lead to visible light emission oscillation effects.

The invention is aiming at a reduction of this problem.

This problem is at least reduced by means of the features of the independent claims. The dependent claims develop further the central idea of the invention.

A first aspect of the invention relates to a method for operating a synch flyback converter arranged to supply lighting means at its output terminals, the flyback converter having a transformer galvanically separating a primary side and a secondary side of the converter. The power transmitted by the converter is feedback-controlled by actively adjusting the conducting time period of the secondary side switch, thus adjusting the amount of a negative current flowing through said switch. In case of a change of a nominal value signal commanding the power to be transmitted by the flyback converter, a switching operation parameter of a primary side switch of the converter is adjusted by a feed forward manner. In case of such change of nominal value a feed forward disturbance signal is applied to the conducting time period of the secondary side switch.

The switching operation parameter of said primary side may be a switching off current threshold of the primary side switch.

In case the nominal value signal is changed towards a higher value, the feed forward disturbance signal may add an increase of the time period of the negative current flow.

In case the nominal value signal is changed towards a lower value, the feed forward disturbance signal causes a decrease of the time period of the negative current flow.

Preferably, the control of the primary side switch (SW1) has a lower resolution than the control of the secondary side switch (SW2).

Preferably the disturbance signal is added to the output signal of a feedback control unit (3) controlling the secondary side switch (SW2).

The invention further relates to a synchronous flyback converter having a control unit arranged for performing such method.

The invention also proposes a system comprising a converter as well as LED based lighting means supplied by such converter.

Further features, advantages and objects of the invention will now be explained with reference to the figures of the enclosed drawings:
- Figure 1: schematically shows the generally known synchronous flyback setup,
- Figure 2: shows the different phases of the operation of a known synchronous flyback,
- Figure 3: shows a primary side set point change depending on a change of a nominal signal,
- Figure 4: shows an embodiment of a synchronous flyback controller according to the invention, and
- Figures 5a-5d: show graphs explaining the effect of the invention compared to prior art designs.

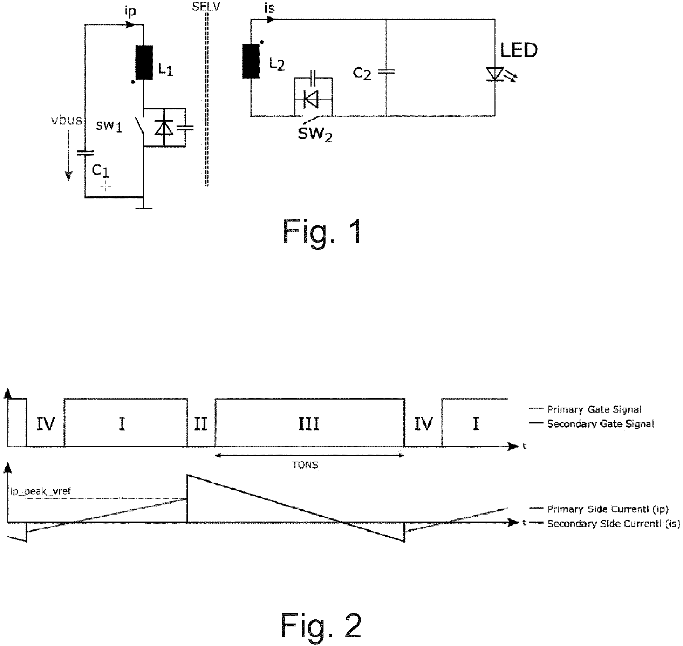

In Fig. 1 generally, a principle of a synchronous flyback is shown.

The flyback converter is supplied with a DC voltage V_{Bus}, which supplies the primary side of the flyback converter, the primary side comprising a primary side inductor L₁ and a switch SW₁ connected in series thereto. The primary side inductor L₁ is isolated from a secondary side winding L₂, which is switched in parallel to a capacitor C₂.

"Primary side" and "secondary side" have to be seen with reference to the isolation by the transformer L1, L2.

The voltage of the capacitor C₂ may be the voltage supplied to the output terminals of the synchronous flyback and thus, the voltage supplying the lighting means LED. Further, on the secondary side, an actively controlled secondary side switch SW₂ is provided.

Now, the operation phases of such synchronous flyback will be described with reference to Figure 2.

Phase I: In the first phase, the switch SW₁ is turned on by a control unit of the synchronous flyback, while the same of a different control unit is switching off (non-conductive) the secondary switch SW₂.

Phase II: This is the so-called primary fall secondary rise phase. The second phase is a dead-time phase with both switches off (non-conductive). Through the diode in the secondary side (in parallel to the switch SW₂), the current can already commute in this phase.

Phase III: In the third phase, the primary side switch SW₁ is non-conductive, but the secondary side switch SW₂ is controlled to be conductive. At the end of this phase, the current is negative (see especially the lower figure illustration in Fig. 2).

Phase IV: This is the so-called secondary fall primary rise phase. The second phase is a dead time in which both switches are off (non-conductive).

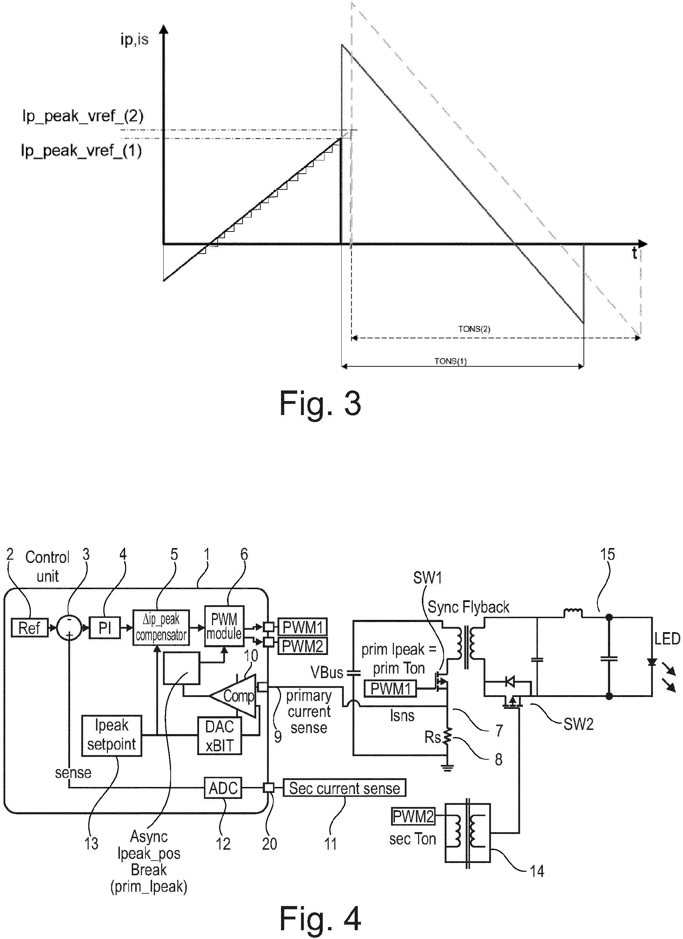

With Fig. 3, the primary side set point change will now be explained.

In case a varying nominal signal is supplied to the control of the converter, the switching off current threshold is changed (in the example of Fig. 3 increased) from a first value Ip_peak_vref_(1) to a second reference Ip_peak_vref_(2). As shown, in practice the increase is performed in incremental steps defined by the resolution of the control circuit, especially the resolution of the unit setting (open loop) the switching off current threshold Ip_peak_vref.

The change of the current threshold Ip_peak_vref_(1) is effected in open loop (feed-forward). At the same time, in order to compensate for this change in the operation point of the primary side switch, the the delta ip_peak compensator block 5 (Fig.4) of the feedback control will increase the conducting time period TONS of the second side primary switch (while the primary side switch SW₁ is non-conductive), which leads to an increased negative current at the expiration of the increased period TONS (2). The invention especially deals with embodiments in which the resolution of the secondary side switch is higher (finer) than the resolution of the setting of the threshold for the primary side switch. Note that the primary side setting is performed using a threshold set by a comparator while the secondary side control is performed by defining a time period TONS.

With reference to Fig. 4, now an embodiment according to the invention will be explained.

A control unit 1 may be implemented for example as an ASIC, as a microcontroller or some hybrid version thereof. The control unit 1 senses a secondary side current 11 in a manner known as such. The sensed secondary side current 11 is supplied to a port 20 of the control unit 1, is then A/D converted 12 and supplied, as the actual value for the current through the LED means, to a comparator 3. The comparator compares the A/D converted actual signal with a given reference 2 commanding the nominal value for the current through the LED lighting means and thus the light intensity emitted.

Any deviation present at the output of the comparator 3 is fed to a control algorithm unit 4, which may be for example a PI control unit. The PI control unit 4 issues a control signal, which is supplied to a PWM module 6, which issues a first control signal PWM 1, which may be a PWM signal, as well as a second PWM signal PWM 2. The first signal PWM 1 is set in order to control the switching operation of the primary side switch SW₁. The second control signal PWM 2 is used to control the switching operation of the secondary side switch SW₂.

Preferably, the signal PWM 2 is transmitted in an isolated manner, such as for example using a transformer 14 (or an optocoupler) in order to have a complete galvanic isolation between the secondary side and the primary side of the synchronous flyback.

Furthermore, a shunt resistor 8 may be provided in series to the primary side switch SW₁ in order to sense a primary current sense signal 9 supplied (as the signal representing the voltage across the shunt resistor 8) to a comparator 10 of the control unit 1 comparing this signal 9 with a D/A converted Iₚₑₐₖ set point value signal from a Iₚₑₐₖ set point setting unit 13. The output of this comparator 10 is supplied to the PWM module 6. The PWM signal 1 thus has a duty cycle defined by the signal 9 crossing a threshold supplied by the Iₚₑₐₖ set point setting unit 13 to the comparator 10. The Iₚₑₐₖ set point setting unit 13 may vary the level of the Iₚₑₐₖ set point value signal e.g. depending on load conditions.

Further, the Iₚₑₐₖ set point signal 13 is also supplied to a Δip_peak compensator unit 5, which is preferably arranged between the control algorithm unit 4 and the PWM module 6 of the control unit 3. This compensator unit 5 is arranged to add a compensating value to the output signal of the control algorithm 4 in order to modify, in open loop, the control signal PWM 2 supplied to the secondary side switch SW₂. The compensator 5 adds a compensating value which depends (and varies with) the level of the of the Iₚₑₐₖ set point value signal.

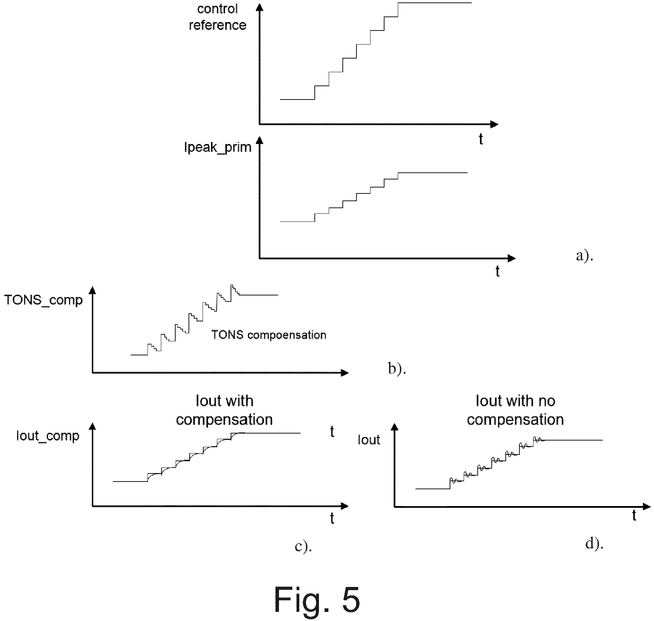

Thus, the compensator unit 5 can be seen as adding a disturbance signal to the output of the control algorithm unit 4 , the addition resulting in a signal TONS_comp (Fig5b) . This disturbance will then be gradually reduced by the feedback control of the secondary side switch (PI unit 4).

The effect of the invention will now be explained with reference to Fig. 5.

In Fig. 5a, it can be seen that in case for example, the nominal signal, such as for example an external or internal dimming signal called "control reference" may for example be stepwise increased over time. At the same time, as already explained above, the switching off primary current threshold will also (in this case: stepwise) be increased by the control unit to a higher level.

As it can be seen in Fig. 5d, because of the time constant of the secondary side switch feedback control, the resulting output current Iₒᵤₜ may show a ringing behavior, which can lead to undesired effects in the light output of LED based lighting means supplied by the converter.

Fig. 5b shows the compensation signal TONS_comp, which the compensator unit 5 is adding to the output signal of the feedback control unit 4. Essentially, with each increase of the control reference (Fig. 5a) and the corresponding change of the operation set point of the primary side switching operation (lower view in Fig. 5a), the compensating unit 5 adds a jump-like disturbance to the output signal of the feedback control unit 4. In case the switching off current threshold of the primary side switch is increased, the compensation signal provides a stepwise increase of the switching-on time period TONS comp of the secondary side switch, leading to an increased negative current flow. This negative disturbance is then stepwise decreased. The steps of this decrease are shown finer (higher resolved) than the corresponding steps of the control of the primary side switch.

The disturbance signal is made to have the following effect:
- In case the case the switching off current threshold of the primary side switch is increased, the disturbance signal leads to a stepwise increase of TONS and thus an increase of the negative current of the switch SW2.
- In case the switching off current threshold of the primary side switch is decreased, the disturbance signal leads to a stepwise decrease of TONS and thus a decrease of the negative current of the switch SW2.

Fig. 5c shows the effect of this compensation signal of Fig. 5b as to the output current Iₒᵤₜ. The addition of the compensation signal of Fig. 5b provides an asymptomatic smoothening of the output current Iₒᵤₜ essentially without ringing behavior.

## Claims

1. A method for operating a synchronous flyback converter arranged to supply lighting means at its output terminals,
the flyback converter having a transformer (LI, L2) galvanically separating a primary side and secondary side of the converter,
wherein the power transmitted by the converter is feedback-controlled by actively adjusting the conducting time period of secondary side switch (SW2), thus adjusting the amount of a negative current flowing through said secondary side switch (SW2), wherein a switching operation parameter of a primary side switch (Sw1) of the converter is adjusted in a feed forward manner,
**characterized in that**
in case of such change of nominal value a feed forward disturbance signal (5) is applied in order to modify the conducting time period *TONS* of secondary side switch (SW2).

2. The method of claim 1,
wherein the switching operation parameter of said primary side switch (SW1) is a switching off current threshold of the primary side switch (SW1).

3. The method of claim 1 or 2,
wherein in case the nominal value signal is changed towards a higher value, the feed forward disturbance signal adds an increase of the time period of the negative current flow.

4. The method according to any of the preceding claims,
wherein in case the nominal value signal is changed towards a lower value, the feed forward disturbance signal causes a decrease of the time period of the negative current flow.

5. The method according to any of the preceding claims,
wherein the control of the primary side switch (SW1) has a lower resolution than the control of the secondary side switch (SW2).

6. The method according to any of the preceding claims,
wherein the disturbance signal is added to the output signal of a feedback control unit (3) controlling the secondary side switch (SW2).

7. A synchronous flyback converter having a control unit arranged for performing a method according to any of the preceding claims.

8. A system comprising a converter according to claim 4 as well as LED based lighting means supplied by such converter.

## Amended claims

### Amended claims in accordance with Rule 137(2) EPC.

1. A method for operating a synchronous flyback converter arranged to supply lighting means at its output terminals,
the flyback converter having a transformer (L1, L2) galvanically separating a primary side and secondary side of the converter,
wherein the power transmitted by the converter is feedback-controlled by actively adjusting the conducting time period (*TONS*) of a secondary side switch (SW2) of the converter, thus adjusting an amount of a negative current flowing through said secondary side switch (SW2),
wherein in case of a change of a nominal value signal (13) commanding a power to be transmitted by the flyback converter, a switching operation parameter of a primary side switch (SW1) of the converter is adjusted in a feed forward manner,
wherein in case of such change of the nominal value signal (13) a feed forward disturbance signal (5) is applied to the conducting time period (*TONS*) of the secondary side switch (SW2).

2. The method of claim 1,
wherein the switching operation parameter of said primary side switch (SW1) is a switching off current threshold of the primary side switch (SW1).

3. The method of claim 1 or 2,
wherein in case the nominal value signal is changed towards a higher value, the feed forward disturbance signal adds an increase of the time period of the negative current flow.

4. The method according to any of the preceding claims,
wherein in case the nominal value signal is changed towards a lower value, the feed forward disturbance signal causes a decrease of the time period of the negative current flow.

5. The method according to any of the preceding claims,
wherein the control of the primary side switch (SW1) has a lower resolution than the control of the secondary side switch (SW2).

6. The method according to any of the preceding claims,
wherein the disturbance signal is added to the output signal of a feedback control unit (3) controlling the secondary side switch (SW2).

7. A synchronous flyback converter having a control unit arranged for performing a method according to any of the preceding claims.

8. A system comprising a converter according to claim 4 as well as LED based lighting means supplied by such converter.
